# EUROPÄISCHE PATENTSCHRIFT

(11) **EP 4 388 567 B1**
(45) Veröffentlichungstag und Bekanntmachung des Hinweises auf die Patenterteilung: **09.04.2025**
(21) Anmeldenummer: 22764686.6
(22) Anmeldetag: 09.08.2022
(51) Int. Cl.: H01H 9/00, H01H 11/00

(54) **VORRICHTUNG UND VERFAHREN ZUR ÜBERWACHUNG EINES LASTSTUFENSCHALTERS**
DEVICE AND METHOD FOR MONITORING AN ON-LOAD TAP CHANGER
DISPOSITIF ET PROCÉDÉ DE SURVEILLANCE D'UN CHANGEUR DE PRISES EN CHARGE

(30) Priorität: 03.09.2021 DE 102021122813
(43) Veröffentlichungstag der Anmeldung: 26.06.2024
(73) Patentinhaber: Maschinenfabrik Reinhausen GmbH, 93059 Regensburg (DE)
(72) Erfinder: VIERECK, Karsten, 93049 Regensburg (DE); SAVELIEV, Anatoli, 93197 Zeitlarn (DE); HEGER, Michael, 94315 Straubing (DE); DAISER, Sebastian, 93128 Regenstauf (DE)
(86) Internationale Anmeldenummer: PCT/EP2022/072319
(87) Internationale Veröffentlichungsnummer: WO 2023/030837

(56) Entgegenhaltungen:
- EP-A1- 1 884 965
- DE-B3- 102011 112 748
- JP-A- H0 613 248
- JP-A- H07 106 165
- JP-A- H09 213 542

## Beschreibung

Die Erfindung betrifft eine Vorrichtung zur Überwachung eines Laststufenschalters sowie ein Verfahren zur Überwachung eines Laststufenschalters.

Laststufenschalter sind aus dem Stand der Technik bekannt und weisen üblicherweise einen Lastumschalter und einen Wähler auf. Die Betätigung der Laststufenschalter erfolgt meist mittels eines Motorantriebs in Verbindung mit einem Federenergiespeicher. Beim Durchführen einer Umschaltung spannt der Motorantrieb die Federn des Federenergiespeichers vor. Hierbei werden entweder Druckfedern zusammengedrückt oder Zugfedern gestreckt. Ab einem definierten mechanischen Punkt wird die, in die Federn eingebrachte, Energie schlagartig freigegeben und der Laststufenschalter betätigt. Der Motorantrieb ist dabei seitlich am Transformatorkessel angebaut. Von diesem führt ein Antriebswellenzug zum Laststufenschalter. Mit bekannten Verfahren wird beim Überwachen des Laststufenschalters ein Drehmoment an einer ersten Stelle ermittelt. Diese erste Stelle befindet sich im Gehäuse des Motorantriebes. Für eine vollständige und genaue Überwachung wäre stattdessen das nicht bekannte Drehmoment an einer zweiten Stelle im Laststufenschalter relevant. Erschwerend kommt noch dazu, dass es keinen konstant bleibenden mathematischen Bezug zwischen einem in dem Motorantrieb ermittelten Drehmoment und dem realen Drehmoment am Laststufenschalter gibt. Vielmehr verändern sich durch Temperatureinflüsse, Alterung und Verschleißerscheinungen der Mechanik des Laststufenschalters, der Lagerstellen des Antriebswellenzuges und des Antriebsgetriebes sowie durch andere Einflüsse während der gesamten Betriebsdauer des Laststufenschalters, die sich in der Regel über viele Jahre erstreckt, die dort auftretenden Drehmomente in Relation zu den errechneten Drehmomenten. Es ist also zwischen dem Motor des Motorantriebes und dem von ihm angetriebenen Laststufenschalter über die gesamte Betriebszeit kein stabiles, d. h. konstantes Übertragungsverhalten hinsichtlich der Drehmomentverläufe gegeben.

JP H07 106165 A offenbart eine Vorrichtung zur Überwachung eines Laststufenschalters gemäß dem Oberbegriff des Anspruchs 1.

Aufgabe der Erfindung ist es deshalb, eine Vorrichtung zur Überwachung eines Laststufenschalters zu schaffen, die einen genauen Drehmomentverlauf im Laststufenschalter bestimmt und dabei einfach und kompakt aufgebaut ist.

Diese Aufgabe wird mit einer Vorrichtung gemäß dem Anspruch 1 gelöst. Die Merkmale der Unteransprüche bilden dabei vorteilhafte Weiterbildungen der Erfindung.

Weitere Aufgabe der Erfindung ist es, ein Verfahren zur Überwachung eines Laststufenschalters zu schaffen, welches den Drehmomentverlauf im Laststufenschalter sicher und präzise ermittelt.

Diese Aufgabe wird mit einem Verfahren gemäß dem Anspruch 5 gelöst. Die Merkmale der Unteransprüche bilden dabei vorteilhafte Weiterbildungen der Erfindung.

Die Erfindung schlägt gemäß einem ersten Aspekt eine Vorrichtung zur Überwachung eines Laststufenschalters vor, umfassend
- einen Motorantrieb;
- eine Überwachungseinheit;
- einen Sensor zum Erfassen eines akustischen Signals;
wobei
- die Überwachungseinheit einen Drehmomentverlauf im Laststufenschalter anhand eines Drehmomentverlaufs am Motorantrieb und dem akustischen Signal des Sensors ermittelt.

Die Vorrichtung ermöglicht es, den Drehmomentverlauf im Lastumschalter anhand eines akustischen Signals und des Drehmomentverlaufs am Motor zu bestimmen. Dabei wird das akustische Signal dazu verwendet, das Zeitmoment zu ermitteln, an dem der Lastumschaltersprung im Laststufenschalter erfolgt ist. Basierend auf dieser Information kann das Drehmoment des Motors in das Drehmoment im Laststufenschalters besonders genau überführt werden. Die Verwendung eines Sensors zur Erfassung eines akustischen Signals erlaubt es auch alte Systeme mit der neuen Vorrichtung nachzurüsten. Die Erfassung des Drehmoments am Motorantrieb kann beispielsweise direkt über einen Drehmomentsensor oder indirekt anhand von gemessenen Daten am Motor ermittelt werden.

Die Erfindung schlägt gemäß einem zweiten Aspekt ein Verfahren zur Überwachung eines Laststufenschalters vor, wobei
- anhand eines akustischen Signals ein Zeitbereich, an dem ein Lastumschaltersprung der während einer Umschaltung stattfindet, bestimmt wird;
- der Zeitbereich in einen Drehmomentverlauf eines Motorantriebs übertragen wird;
- im Zeitbereich des Drehmomentverlaufs ein Zeitmoment für den Lastumschaltersprung bestimmt wird;
- anhand des Zeitmoments für den Lastumschaltersprung Referenzpunkte im Drehmomentverlauf des Motorantriebs gesetzt werden;
- der Drehmomentverlauf des Motorantriebs in einen Drehmomentverlauf des Laststufenschalters umgerechnet wird.

Durch die Aufnahme eines akustischen Signals und das Vergleichen dieses Signals mit einem Referenzsignal, kann der Lastumschaltersprung besonders genau detektiert werden. Hierbei wird im akustischen Signal zunächst der Zeitbereich bestimmt, an dem der Lastumschaltersprung erfolgen sollte. Genau dieser Bereich wird dann in den zeitlichen Drehmomentverlauf des Motorantriebs übertragen und analysiert. In diesem Zeitbereich wird dann der genaue Zeitpunkt bestimmt, an dem der Lastumschaltersprung, insbesondere das Entklinken des Federenergiespeichers, erfolgt ist. Ausgehend von diesem Punkt wird der Drehmomentverlauf des Motorantriebs referenziert und in den Drehmomentverlauf des Laststufenschalters umgerechnet. Die Bestimmung des Zeitpunktes an dem der Lastumschaltersprung erfolgt und die darauf basierende Referenzierung und Umrechnung machen das Verfahren besonders genau, sicher und zuverlässig.

Die Bestimmung des Lastumschaltersprungs, insbesondere des Zeitbereichs im akustischen Signal erfolgt zunächst derart, dass
- aus den Rohdaten des während der Umschaltung gemessenem akustischen Signal eine Hüllkurve erzeugt wird;
- die Hüllkurve des akustischen Signals mit einer Referenzhüllkurve verglichen wird;
- die Referenzhüllkurve den Lastumschaltersprung abbildet;
- durch Vergleichen der Hüllkurve des akustischen Signals und der Referenzhüllkurve der Zeitbereich in dem der Lastumschaltersprung stattfindet bestimmt bzw. eingegrenzt wird.

Die Referenzhüllkurve ist dabei bspw. in einem Speicher der Überwachungseinheit bereits hinterlegt, oder wird nach einem Anlernen in der Überwachungseinheit hinterlegt. Die Referenzhüllkurve kann aus mehrerer vorher aufgenommenen und synchronisierten Signalen mehrerer Umschaltungen erzeugt worden sein. Die Referenzhüllkurve könnte darüber hinaus als Mittelwert, als Median oder als gewichteter Mittelwert mit ergänzten Gewichtungsfaktoren der Rohdaten mehrerer vorher aufgenommener und synchronisierter Signale gebildet werden.

Die Referenzhüllkurve kann die Länge der Hüllkurve des gesamten Signals haben. Alternativ kann die Länge der Referenzhüllkurve nur einem festgelegten Bereich bzw. vorbestimmten Abschnitt der Hüllkurve entsprechen. Das Vergleichen der Hüllkurve des Sensors und der Referenzhüllkurve erfolgt vorzugsweise mittels eines Korrelationsverfahrens, beispielsweise Faltung oder Kreuzkorrelationsverfahren. Die Referenzhüllkurve enthält die Informationen, die den Lastumschaltersprung beschreiben. Diese Informationen werden in der Hüllkurve des gemessenen Signals gesucht.

Der Drehmomentverlauf des Motorantriebs kann über einen Drehmomentsensor oder durch Berechnung basierend auf motorspezifischen Daten und Messwerten eines Motors bestimmt werden. Dabei entspricht die Länge des Drehmomentverlauf der Länge der Hüllkurve des akustischen Signals. Der Drehmomentsensor ist vorzugsweise an der Antriebswelle des

Motors und mindestens am Anfang des Antriebswellenzuges angeordnet.

Während des Lastumschaltersprungs bzw. zu Beginn des Lastumschaltersprunges erfolgt üblicherweise eine Entklinkung des Federenergiespeichers.

Nach dem Eingrenzen des Drehmomentverlaufs auf den Zeitbereich aus der Hüllkurve des akustischen Signals kann im entsprechenden Zeitbereich der Zeitpunkt bzw. das Zeitmoment bestimmt werden, in dem der Lastumschaltersprung erfolgt ist. Dabei wir die größte negative Steigung bzw. der höchste negative Gradient im eingegrenzten Zeitbereich des Drehmomentverlaufs bestimmt. Dieses Zeitmoment repräsentiert den Lastumschaltersprung und genauer die Entklinkung des Federenergiespeichers.

Weiterhin wird der Drehmomentverlauf des Motorantriebs in einen Drehmomentverlauf des Laststufenschalters mittels einer linearen Funktion umgerechnet. Diese Funktion ist vorgegeben und ebenfalls in der Überwachungseinheit hinterlegt.

Nachfolgend sind die Erfindung und ihre Vorteile unter Bezugnahme auf die beigefügte Zeichnung ausführlicher beschrieben. Es zeigt:

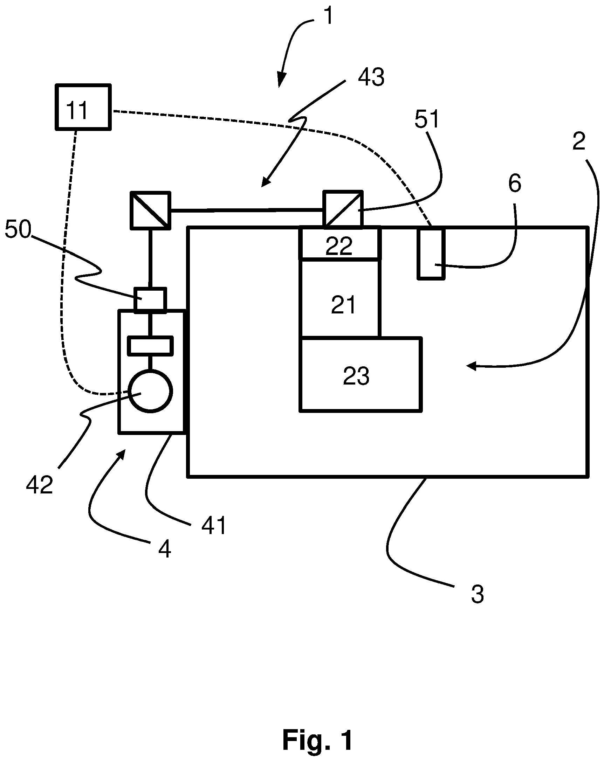

- **Fig. 1**: eine schematische Ansicht der erfindungsgemäßen Vorrichtung zur Überwachung eines Laststufenschalters.

**Figur 1** zeigt eine erfindungsgemäße Vorrichtung 1 zur Überwachung eines Laststufenschalters 2. Der Laststufenschalter 2 ist in einem Transformatorkessel 3 eingebaut. Der Laststufenschalter 2 weist einen Lastumschalter 21 mit einem Federenergiespeicher 22 und einem Wähler 23 auf. Seitlich am Transformatorkessel 3 ist ein Motorantrieb 4 angeordnet. Der Motorantrieb 4 weist ein Gehäuse 41 auf, in dem ein Motor 42 angeordnet ist, der über einen Antriebswellenzug 43 mit dem Laststufenschalter 2 verbunden ist. Der Antriebswellenzug 43 besteht üblicherweise aus mehreren Antriebswellen und Umlenkkupplungen. Zum Durchführen einer Umschaltung treibt der Motor 42 den Laststufenschalter 2 über den Antriebswellenzug 43 an. Während der Umschaltung wird zunächst der Wähler 23 betätigt, wobei eine zu beschaltende Wicklungsanzapfung durch einen entsprechenden Wählerarm vorgewählt wird. Parallel dazu wird der Federenergiespeicher 22 aufgezogen. An einem definierten Zeitpunkt/Zeitmoment wird der Federenergiespeicher 22 entklinkt und gibt die vorher beim Aufziehen gespeicherte Energie schlagartig frei. Mit dieser Energie wird der Lastumschalter 21 betätigt. Bedingt durch den nicht idealen Antriebswellenzug 43, entspricht das Drehmoment an der Position 50 am Motor 42 bzw. am Motorantrieb 4 nicht dem Drehmoment an der Position 51 am bzw. im Laststufenschalter 2. Mit anderen Worten ist das Drehmoment am Motor 4 durch den Antriebswellenzug 43 viel höher als das Drehmoment am bzw. im Laststufenschalter 2.

Die erfindungsgemäße Vorrichtung 1 weist Mittel auf bzw. ist in der Lage das Drehmoment während einer Umschaltung, also über die Zeit, unmittelbar am Motor 42 zu bestimmen oder zu erfassen. Hierfür kann ein Drehmomentsensor verwendet werden, der unmittelbar an der Abtriebswelle des Motors 42 oder unmittelbar am Anfang des Antriebswellenzuges 43 angeordnet ist. Am Anfang des Antriebswellenzuges 43 heißt, dass der Drehmomentsensor an einer Welle angeordnet ist, die aus dem Gehäuse 41 des Motorantriebs 4 heraus oder hinein geht. Der Sensor würde dabei den gemessenen Drehmomentverlauf an eine Überwachungseinheit 11 übermitteln. Dabei ist es unerheblich, ob der Sensor im oder außerhalb des Gehäuses 41 angeordnet ist. Die Drehmomentbestimmung kann auch über die gemessenen Daten des Motors 42 in Verbindung mit einem entsprechenden Motormodell erfolgen. Hierfür werden während der Umschaltung ein Strom, eine Spannung und ein Phasenwinkel des Motors 42 durch eine zentrale Überwachungseinheit 11 gemessen bzw. erfasst. Im Anschluss werden die Daten in einem Motormodell in Drehmomentwerte in der Überwachungseinheit 11 umgerechnet und so ein Drehmomentverlauf generiert. Weitere Daten, die in die Berechnung einfließen können, sind die Temperatur des Motors 42 oder die Temperatur in der Nähe des Motors 42. Die Überwachungseinheit 11 ist derart ausgestaltet, dass diese sowohl einen Drehmomentverlauf direkt messen, als auch indirekt aus den zur Verfügung gestellten Daten berechnen könnte.

Weiterhin weist die Vorrichtung 1 einen Sensor 6 zur Aufnahme akustischer Signale auf. Dieser Sensor 6 ist vorzugsweise in der Nähe des Laststufenschalters 2, vorzugsweis in der Nähe des Lastumschalter 21, insbesondere in der Nähe des Federenergiespeichers 22, vorzugsweise auf dem Gehäuse des Transformators 3 oder am Deckel oder Kopf des Laststufenschalters 2 angeordnet. Der Sensor 6 kann als Beschleunigungssensor (z.B. ein Piezo-Sensor oder ein MEMS-Sensor) ausgebildet sein. Die zentrale Überwachungseinheit 11 ist zum Auswerten und/oder Erfassen der akustischen Signale ausgebildet. Diese ist durch Kabel oder kabellos mit dem Motorantrieb 4, insbesondere dem Motor oder einem Drehmomentsensor, und dem Sensor 6 verbunden. Weiterhin wird mittels der Überwachungseinheit 11 das erfindungsgemäße Verfahren durchgeführt bzw. die Vorrichtung führt das Verfahren aus. Die Überwachungseinheit 11 kann dabei die erfassten Rohdaten des Motorantriebs 4 und des Sensors 6 erfassen und auswerten. Alternativ wird in der Überwachungseinheit 11 nur das erfindungsgemäße Verfahren durchgeführt. Hier sind der Motorantrieb 4 und der Sensor 6 mit entsprechenden Mitteln ausgestattet, die die jeweiligen Rohdaten der Signale erfassen und aufbereiten. Alternativ können mehrere akustische Sensoren 6 vorgesehen sein.

Die **in** **Figur 1** gezeigte Vorrichtung führt das erfindungsgemäße Verfahren zur Überwachung eines Laststufenschalters 2 durch. Während einer Umschaltung, d.h. während der Betätigung des Laststufenschalters 2 wird zunächst ein Drehmomentverlauf des Motorantriebes 4 bestimmt. Umschaltung des Laststufenschalters 2 heißt, dass der Laststufenschalter 2 einen Laststrom von einer Wicklungsanzapfung eines Stufentransformators auf eine benachbarte Wicklungsanzapfung umschaltet. Die Bestimmung des Drehmomentverlaufs wird entweder mit einem Drehmomentsensor, durch Berechnung basierend auf motorspezifischen Daten und Messwerten oder eine andere beliebige Art und Weise durchgeführt. Gleichzeitig wird während der Umschaltung ein akustisches Signal mit Hilfe des Sensors 6 erfasst. Alternativ können mehrere Signale mehrerer Sensoren 6 verwendet werden, wobei die Signale dann zu einem Signal zusammengefasst werden. Dies erfolgt in der Überwachungseinheit 11 oder in einer separaten Einheit im Zuge einer Vorverarbeitungsprozedur.

In einem nächsten Schritt werden die Rohdaten aus dem Signal des Sensors 6 in eine Hüllkurve umgewandelt. Die Hüllkurve bildet die Energie der Schwingungen in einem Frequenzbereich ab. In nächsten Schritt wird im Verlauf dieser Hüllkurve ein Zeitbereich bestimmt, in dem der Lastumschaltersprung erfolgt ist. Hierfür wird die Hüllkurve des gesamten gemessenen Signals mit einer Referenzhüllkurve verglichen. Um das Verfahren zu beschleunigen kann ein vorher festgelegter Bereich bzw. vorbestimmter Abschnitt der Hüllkurve, also nicht die gesamte Hüllkurve, mit einer Referenzhüllkurve verglichen werden, um den wahrscheinlichsten Zeitpunkt des Lastumschaltersprungs eingrenzen zu können. Die Referenzhüllkurve wird aus mehreren Hüllkurven einzelner Signale gebildet. Die Referenzhüllkurve wird aus den Rohdaten mehrerer vorher aufgenommener und synchronisierter Signale einer Lastumschaltung erzeugt. Die Referenzhüllkurve könnte als Mittelwert, als Median oder als gewichteter Mittelwert mit ergänzten Gewichtungsfaktoren der Rohdaten mehrerer vorher aufgenommener und synchronisierter Signale gebildet werden. Die Referenzhüllkurve beinhaltet die Informationen, die einen Lastumschaltersprung charakterisieren.

Die Länge der Referenzhüllkurve entspricht entweder der gesamten Länge der Hüllkurve des aufgenommenen Signals oder der Länge des festgelegten Bereichs bzw. vorbestimmten Abschnitts.

Das Vergleichen der Hüllkurve des Sensors 6 und der Referenzhüllkurve erfolgt mittels eines Korrelationsverfahrens, beispielsweise Faltung oder Kreuzkorrelationsverfahren. Weitere Verfahren zum Vergleichen der Hüllkurven sind möglich. Die Referenzhüllkurve bzw. festgelegter Bereich bzw. vorbestimmter Abschnitt der Referenzhüllkurve bildet den Lastumschaltersprung ab. Hierbei kann entweder die gesamte Hüllkurve mit dem Referenzsignal verglichen werden, oder nur ein vorher festgelegter Bereich bzw. vorbestimmter Abschnitt der Hüllkurve, in dem der Lastumschaltersprung erfolgt ist. Dieser Bereich bzw. Abschnitt kann vorgegeben werden oder alternativ durch ein Anlernen bestimmt werden.

Nach dem Vergleichen mittels Korrelationsverfahren wird eine maximale Übereinstimmung zwischen Referenzhüllkurve und der Hüllkurve des gemessenen Signals bestimmt. Der Zeitbereich in der Hüllkurve des gemessenen Signals mit der größten Übereinstimmung mit der Referenzhüllkurve wird als Lastumschaltersprung markiert.

Nach dem der Zeitbereich, in dem der Lastumschaltersprung erfolgte, in der Hüllkurve bestimmt wurde, wird dieser Zeitbereich in den zeitlichen Verlauf des Drehmomentverlauf übertragen. In dem nun bestimmten Zeitbereich des Drehmomentverlaufs wird ein Zeitpunkt/Zeitmoment bestimmt, an dem die Entklinkung des Federenergiespeichers, die ein Teil des Lastumschaltersprunges ist, erfolgt ist.

Hierbei wird ein Zeitmoment mit der größten negativen Steigung bzw. der höchste negative Gradient im entsprechenden Zeitbereich des Drehmomentverlaufs bestimmt. Im Anschluss werden Referenzpunkte im gesamten Drehmomentverlauf ausgehend von diesem Zeitmoment gesetzt. Mit anderen Worten wird der Drehmomentverlauf an diesem Punkt (Zeitmoment) ausgerichtet. Diese Referenzpunkte beschreiben feste Ereignisse während der Umschaltung im Laststufenschalter 2. Anhand diese Referenzpunkt kann bestimmt werden welcher Teil des Laststufenschalters 2 wann betätigt wurde. Zum Schluss wird dann der Drehmomentverlauf des Motors 42 mittels einer linearen Funktion in den Drehmomentverlauf des Laststufenschalters 2 umgerechnet. Die Umrechnung des Drehmomentverlaufs des Motorantriebs 4 in den des Laststufenschalters 2 kann auch auf eine andere beliebige Art und Weise erfolgen.

Die Überwachungseinheit 11 kann einen Speicher, eine Recheneinheit und eine Kommunikationseinheit umfassen. Die Überwachungseinheit 11 ist derart ausgestaltet, dass diese das erfindungsgemäße Verfahren ausführen kann.

## Patentansprüche

1. Vorrichtung (1) zur Überwachung eines Laststufenschalters (2), umfassend
- einen Motorantrieb (4);
- eine Überwachungseinheit (11);
- einen Sensor (6) zum Erfassen eines akustischen Signals, das beim Lastumschaltersprung, der während einer Umschaltung stattfindet, erzeugt wird; **dadurch gekennzeichnet, dass**
- die Überwachungseinheit (11) einen Drehmomentverlauf im Laststufenschalter (2) anhand eines Drehmomentverlaufs am Motorantrieb (4) und dem akustischen Signal des Sensors (6) ermittelt.

2. Vorrichtung (1) nach Anspruch 1, wobei
- der Motorantrieb (4) einen Drehmomentsensor zum Ermitteln des Drehmoments aufweist.

3. Vorrichtung (1) nach Anspruch 1 - 2, wobei
- das Drehmoment am Motorantrieb (4) anhand von gemessenen Daten am Motor (42) durch die Überwachungseinheit (11) ermittelt wird.

4. Vorrichtung (1) nach Anspruch 1 - 3, wobei
- der Sensor (6) in der Nähe des Laststufenschalters (2) am Stufenschalterkopf oder am Transformatorgehäuse angeordnet ist.

5. Verfahren zur Überwachung eines Laststufenschalters (2) mit einer Vorrichtung (1) nach einem der Ansprüche 1 bis 4, wobei
- anhand eines akustischen Signals ein Zeitbereich, an dem ein Lastumschaltersprung der während einer Umschaltung stattfindet, bestimmt wird;
- der Zeitbereich in einen Drehmomentverlauf eines Motorantriebs (4) übertragen wird;
- im Zeitbereich des Drehmomentverlaufs ein Zeitmoment für den Lastumschaltersprung bestimmt wird;
- anhand des Zeitmoments für den Lastumschaltersprung Referenzpunkte im Drehmomentverlauf des Motorantriebs (4) gesetzt werden;
- der Drehmomentverlauf des Motorantriebs (4) in einen Drehmomentverlauf des Laststufenschalters (2) umgerechnet wird.

6. Verfahren zur Überwachung eines Laststufenschalters (2) nach Anspruch 5, wobei
- aus dem akustischen Signal eine Hüllkurve erzeugt wird;
- die Hüllkurve des akustischen Signals mit einer Referenzhüllkurve verglichen wird;
- die Referenzhüllkurve den Lastumschaltersprung abbildet;
- durch Vergleichen der Hüllkurve des akustischen Signals und der Referenzhüllkurve der Zeitbereich in dem der Lastumschaltersprung stattfindet bestimmt wird.

7. Verfahren zur Überwachung eines Laststufenschalters (2) nach Anspruch 5 bis 6, wobei
- der Drehmomentverlauf des Motorantriebs (4) über einen Drehmomentsensor oder durch Berechnung basierend auf motorspezifischen Daten und Messwerten eines Motors (42) bestimmt wird.

8. Verfahren zur Überwachung eines Laststufenschalters (2) nach Anspruch 5 bis 7, wobei
- während des Lastumschaltersprungs eine Entklinkung des Federenergiespeichers (22) erfolgt.

9. Verfahren zur Überwachung eines Laststufenschalters (2) nach Anspruch 5 bis 8, wobei
- das Zeitmoment für den Lastumschaltersprung bestimmt wird, welches durch die größte negative Steigung bzw. den höchsten negativen Gradienten im Zeitbereich des Drehmomentverlaufs abgebildet wird.

10. Verfahren zur Überwachung eines Laststufenschalters (2) nach Anspruch 5 bis 9, wobei
- der Drehmomentverlauf des Motorantriebs (4) in einen Drehmomentverlauf des Laststufenschalters (2) mittels einer linearen Funktion umgerechnet wird.

11. Verfahren zur Überwachung eines Laststufenschalters (2) nach Anspruch 5 bis 10, wobei
- die Referenzhüllkurve aus mehrerer vorher aufgenommenen und synchronisierten Signalen mehrerer Umschaltungen erzeugt wird.

## Claims

1. Device (1) for monitoring a on-load tap-changer (2), comprising
- a motor drive (4);
- a monitoring unit (11);
- a sensor (6) for detecting an acoustic signal that is generated when the load changeover switch jumps during a changeover;
- **characterized in that** the monitoring unit (11) determines a torque curve in the on-load tap-changer (2) on the basis of a torque curve on the motor drive (4) and the acoustic signal of the sensor (6).

2. Device (1) according to claim 1, wherein
- the motor drive (4) has a torque sensor for determining the torque.

3. Device (1) according to claim 1 - 2, wherein
- the torque on the motor drive (4) is determined by the monitoring unit (11) on the basis of measured data on the motor (42).

4. Device (1) according to claim 1 - 3, wherein
- the sensor (6) is located near the on-load tap-changer (2) on the tap-changer head or on the transformer housing.

5. Method for monitoring an on-load tap-changer (2) with a device (1) according to one of claims 1 to 4, wherein
- An acoustic signal is used to determine a time range at which a changeover switch jump occurs during a changeover;
- the time domain is transferred to a torque curve of a motor drive (4);
- a time torque for the diverter switch jump is determined in the time range of the torque curve;
- reference points are set in the torque curve of the motor-drive unit (4) using the time torque for the diverter switch jump;
- the torque curve of the motor-drive unit (4) is converted into a torque curve of the on-load tap-changer (2).

6. Method for monitoring a on-load tap-changer (2) according to claim 5, wherein
- an envelope curve is generated from the acoustic signal;
- the envelope of the acoustic signal is compared with a reference envelope;
- the reference envelope maps the load switch jump;
- the time range in which the load switch jump takes place is determined by comparing the envelope of the acoustic signal and the reference envelope.

7. Method for monitoring a on-load tap-changer (2) according to claim 5 to 6, wherein
- the torque curve of the motor drive (4) is determined via a torque sensor or by calculation based on motor-specific data and measured values of a motor (42).

8. Method for monitoring a on-load tap-changer (2) according to claims 5 to 7, wherein
- the spring energy accumulator (22) is unlatched during the diverter switch jump.

9. Method for monitoring a on-load tap-changer (2) according to claims 5 to 8, wherein
- the time torque for the diverter switch step is determined, which is represented by the largest negative slope or the highest negative gradient in the time range of the torque curve.

10. Method for monitoring a on-load tap-changer (2) according to claims 5 to 9, wherein
- the torque curve of the motor-drive unit (4) is converted into a torque curve of the on-load tap-changer (2) by means of a linear function.

11. Method for monitoring a on-load tap-changer (2) according to claims 5 to 10, wherein
- the reference envelope is generated from several previously recorded and synchronized signals of several switchings.

## Revendications

1. Dispositif (1) de surveillance d'un changeur de prises en charge (2), comprenant
- un entraînement motorisé (4) ;
- une unité de surveillance (11) ;
- un capteur (6) pour détecter un signal acoustique généré lors du saut de commutateur de charge qui a lieu pendant une commutation ;
- **caractérisé en ce que** l'unité de surveillance (11) détermine une courbe de couple dans le changeur de prises en charge (2) à l'aide d'une courbe de couple sur l'entraînement à moteur (4) et du signal acoustique du capteur (6).

2. Dispositif (1) selon la revendication 1, dans lequel
- l'entraînement à moteur (4) présente un capteur de couple pour déterminer le couple.

3. Dispositif (1) selon les revendications 1 à 2, dans lequel
- le couple sur l'entraînement à moteur (4) est déterminé par l'unité de surveillance (11) à l'aide de données mesurées sur le moteur (42).

4. Dispositif (1) selon les revendications 1 à 3, dans lequel
- le capteur (6) est disposé à proximité du changeur de prises en charge (2) sur la tête du changeur de prises ou sur le boîtier du transformateur.

5. Procédé de surveillance d'un changeur de prises en charge (2) avec un dispositif (1) selon l'une des revendications 1 à 4, dans lequel
- à l'aide d'un signal acoustique, une plage de temps à laquelle un saut de commutateur de charge qui a lieu pendant une commutation est déterminé ;
- la plage de temps est transférée dans une courbe de couple d'un entraînement par moteur (4) ;
- dans la plage temporelle de la courbe de couple, un couple temporel est déterminé pour le saut du commutateur en charge ;
- des points de référence sont définis dans la courbe de couple du mécanisme d'entraînement à moteur (4) à l'aide du couple temporel pour le saut du commutateur en charge ;
- la courbe de couple du mécanisme d'entraînement à moteur (4) est convertie en une courbe de couple du changeur de prises en charge (2).

6. Procédé de surveillance d'un changeur de prises en charge (2) selon la revendication 5, dans lequel
- une enveloppe est générée à partir du signal acoustique ;
- l'enveloppe du signal acoustique est comparée à une enveloppe de référence ;
- l'enveloppe de référence reproduit le saut de commutateur de charge ;
- en comparant l'enveloppe du signal acoustique et l'enveloppe de référence, on détermine la plage de temps dans laquelle se produit le saut de commutation de charge.

7. Procédé de surveillance d'un changeur de prises en charge (2) selon les revendications 5 à 6, dans lequel
- l'évolution du couple de l'entraînement par moteur (4) est déterminée par un capteur de couple ou par calcul sur la base de données spécifiques au moteur et de valeurs de mesure d'un moteur (42).

8. Procédé de surveillance d'un changeur de prises en charge (2) selon les revendications 5 à 7, dans lequel
- un désencliquetage de l'accumulateur d'énergie à ressort (22) a lieu pendant le saut de commutateur de charge.

9. Procédé de surveillance d'un changeur de prises en charge (2) selon les revendications 5 à 8, dans lequel
- le couple temporel pour le saut de commutateur de charge est déterminé, lequel est représenté par la plus grande pente négative ou le plus grand gradient négatif dans le domaine temporel de la courbe de couple.

10. Procédé de surveillance d'un changeur de prises en charge (2) selon les revendications 5 à 9, dans lequel
- la courbe de couple du mécanisme d'entraînement à moteur (4) est convertie en une courbe de couple du changeur de prises en charge (2) au moyen d'une fonction linéaire.

11. Procédé de surveillance d'un changeur de prises en charge (2) selon les revendications 5 à 10, dans lequel
- l'enveloppe de référence est générée à partir de plusieurs signaux de plusieurs commutations préalablement enregistrés et synchronisés.
